# EUROPEAN PATENT APPLICATION

(11) **EP 4 345 995 A1**
(43) Date of publication of application: **03.04.2024**
(21) Application number: 23159296.5
(22) Date of filing: 01.03.2023
(51) Int. Cl.: H01M 50/209, H01M 50/30, H01M 50/507, H01M 50/519

(54) **WIRING HARNESS BOARD ASSEMBLY AND BATTERY MODULE**

(30) Priority: 30.09.2022 CN 202222602517 U
(71) Applicant: CALB Group Co., Ltd., Changzhou City, Jiangsu Province (CN)
(72) Inventor: ZHAO, Dong, Changzhou City, Jiangsu Province (CN)
(74) Representative: Becker, Eberhard

(57) **Abstract**

A wiring harness board assembly (1) and a battery module are provided. The wiring harness board assembly (1) covers a battery apparatus (2) including a plurality of single batteries (21). The wiring harness board assembly (1) includes: a wiring harness board (11) provided with a plurality of through holes (111), where positions of the through holes (11 1) correspond one-to-one to positions of explosion-proof valves (211) of the single batteries (21); an accommodating portion (12) disposed on the wiring harness board (11), where the accommodating portion (12) covers a partial region of at least one of the through holes (111); and a protective member covers the through holes (111). The protective member is adjacent to the accommodating portion (12), and a gap is provided between a side portion of the accommodating portion (12) covering the through holes (111) and the protective member.

## Description

### BACKGROUND

### Technical Field

The disclosure relates to the technical field of batteries, and in particular, relates to a wiring harness board assembly and a battery module.

### Description of Related Art

At present, the new energy vehicle market is undergoing a rapid development. Battery modules in the battery packs are the power sources of the new energy vehicles, so the safety and reliability of the battery modules are crucial to the whole system. A battery module includes a battery apparatus and a wiring harness board assembly, and the battery apparatus includes a plurality of single batteries. The single batteries are connected by busbars. The wiring harness board assembly covers the battery apparatus and is configured to support the busbars, and the wiring harness board assembly is provided with through holes corresponding to the positions of the explosion-proof valves of the single batteries.

In order to reasonably optimize the space in the battery pack, at present, most of the components are mounted on the wiring harness board assembly. However, under this arrangement, the explosion-proof valves of the single batteries may be easily blocked. When thermal runaway occurs in a single battery, heat and electrolyte cannot be smoothly ejected from the explosion-proof valve, this may lead to the concentrated flow of the ejected liquid to the adjacent single batteries, resulting in thermal runaway of the adjacent single batteries.

### SUMMARY

The disclosure provides a wiring harness board assembly and a battery module.

The technical solutions to the problems adopted by the disclosure includes the following.

The disclosure provides a wiring harness board assembly covering a battery apparatus including a plurality of single batteries. The wiring harness board assembly includes a wiring harness board, an accommodating portion, and a protective member.

The wiring harness board is provided with a plurality of through holes, and positions of the through holes correspond one-to-one to positions of explosion-proof valves of the single batteries.

The accommodating portion is disposed on the wiring harness board, and the accommodating portion covers a partial region of at least one of the through holes.

The protective member covers the through holes. The protective member is adjacent to the accommodating portion, and a gap is provided between a side portion of the accommodating portion covering the through holes and the protective member.

In the wiring harness board assembly provided by the disclosure, by providing a gap between the protective member and the accommodating portion, since the accommodating portion shields the through holes, the explosion-proof valve can concentratively explode in the gap. Further, when the explosion-proof valve bursts open, it may break through the protective member at the corresponding position, while the protective members at other positions still cover other single batteries.

The disclosure further provides a battery module including the abovementioned wiring harness board assembly.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a structural schematic view of a battery module in an embodiment.
FIG. 2 is a top view of the battery module in an embodiment.
FIG. 3 is a top view of a wiring harness board assembly in an embodiment.
FIG. 4 is a schematic view of a connection relationship between a protective member and an accommodating portion in an embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

One object of the invention is to provides a wiring harness board assembly and a battery module to solve the problems that occur when an explosion-proof valve smoothly explodes.

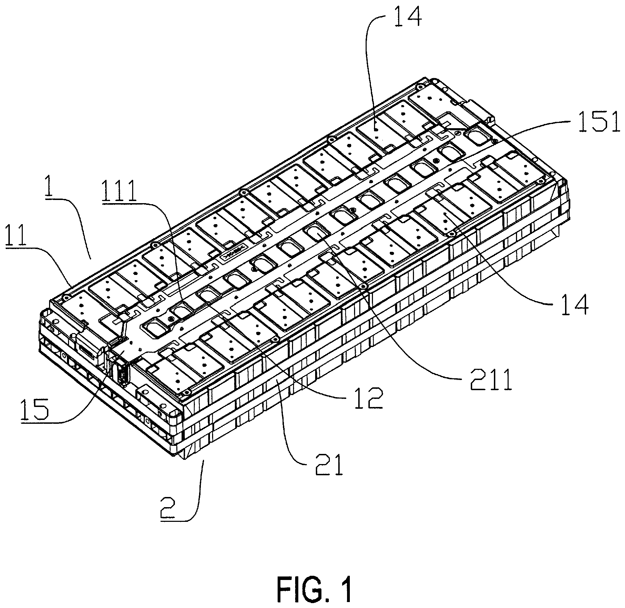

With reference to FIG. 1, this embodiment provides a battery module including a wiring harness board assembly 1 and a battery apparatus 2. The battery apparatus 2 includes a plurality of single batteries 21 arranged side by side, and two adjacent single batteries 21 are connected by the surfaces with the largest surface areas. A positive electrode, a negative electrode, and an explosion-proof valve 211 are provided on a top portion of each of the single batteries 21, and the positive electrode, the negative electrode, and the explosion-proof valve 211 of each of the single batteries 21 are arranged side by side. The explosion-proof valve 211 is provided between the positive electrode and the negative electrode and is located in the middle of the battery apparatus 2 in a width direction. Herein, length directions of the battery apparatus 2 and the wiring harness board assembly 1 are both an arrangement direction of the single batteries 21, and the width direction is perpendicular to the length directions and is on the same horizontal plane as the length directions.

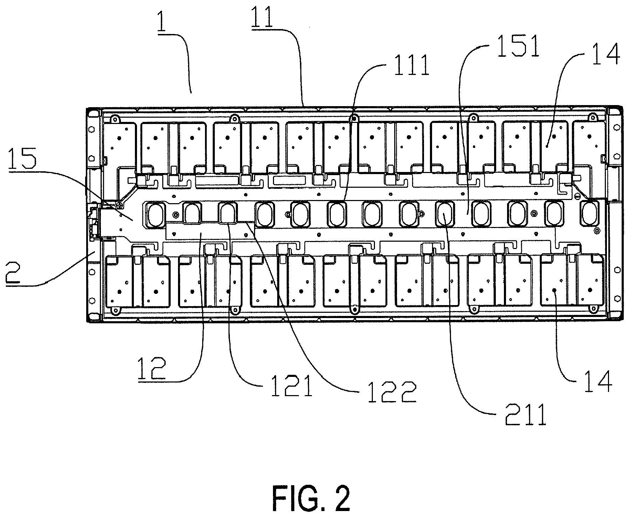

With reference to FIG. 1 to FIG. 3, the wiring harness board assembly 1 covers the battery apparatus 2. The wiring harness board assembly 1 includes a wiring harness board 11, a circuit board 15, and a plurality of busbars 14. The wiring harness board 11 covers the battery apparatus 2, and the wiring harness board 11 is provided with a plurality of through holes 111 and a plurality of penetrating holes 112. The through holes 111 are provided in the middle of a width direction of the wiring harness board 11 and are arranged side by side in a length direction of the wiring harness board 11. The positions of the through holes 111 correspond one-to-one to the positions of the explosion-proof valves 211 of the single batteries 21, so that the wiring harness board 11 is prevented from blocking the explosion-proof valves 211 and affecting the explosion of the explosion-proof valves 211. The penetrating holes 112 are arranged in two rows side by side in the length direction of the wiring harness board 11, and the two rows of penetrating holes 112 are located on both sides of one row of the through holes 111 in the width direction. Further, the positions of one row of penetrating holes 112 correspond one-to-one to the positions of the positive electrodes of the single batteries 21, and the positions of the other row of penetrating holes 112 correspond one-to-one to the positions of the negative electrodes of the single batteries 21.

The number of the busbars 14 is equal to the number of the penetrating holes 112, and the positions of the two correspond one-to-one to each other, so that the busbars 14 are mounted in the penetrating holes 112 and are connected to the positive electrodes or the negative electrodes of the single batteries 21. The circuit board 15 is arranged between the two rows of busbars 14, that is, the circuit board 15 is located in the middle of the wiring harness board 11 in the width direction and extends in the length direction of the wiring harness board 11. Since the through holes 111 corresponding to the positions of the explosion-proof valves 211 are provided in the middle of the wiring harness board 11 in the width direction, in order to prevent the circuit board 15 from covering the through holes 111 and affecting the explosion of the explosion-proof valves 211, the positions of the circuit board 15 corresponding to the through holes 111 are via holes 151 penetrating through upper and lower surfaces. The busbars 14 are all connected to the circuit board 15, so a series-parallel connection is formed among the single batteries 21.

In this embodiment, the circuit board 15 may be selected as a flexible circuit board.

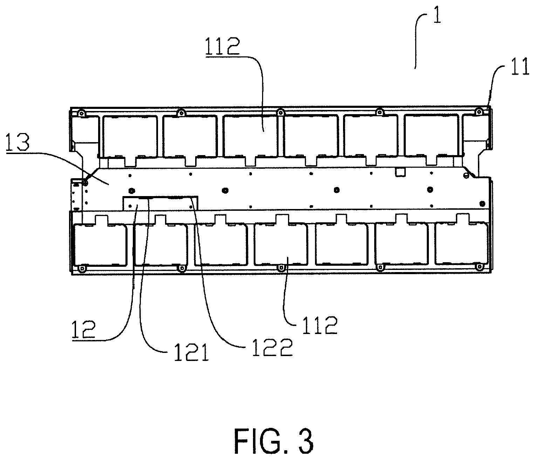

With reference to FIG. 3, the wiring harness board assembly further includes a protective member 13, and the protective member 13 is disposed on the circuit board 15 and covers plural through holes 111. When thermal runaway occurs in a single battery 21 and causes the explosion-proof valve 211 of this single battery 21 to explode, the impact force generated by the bursting explosion-proof valve 211 breaks through the protective member 13 at this position, but the protective members 13 at other positions cover the through holes 111 intact. Therefore, the liquid ejected from the explosion-proof valve 211 is flushed out from the damaged part of the protective member 13, and other single batteries 21 are not affected by the ejected liquid due to the shielding of the undamaged protective member 13, and the liquid ejected when the explosion-proof valve explodes is thus prevented from flowing to other single batteries. In this way, thermal runaway of other single batteries 21, especially the single batteries 21 adjacent to the thermally runaway single battery 21, is prevented from occurring. The accommodating portion is arranged so that the components are allowed to be assembled together, and the components inside the battery pack are thus prevented from being haphazardly mounted. Typically, the protective member 13 is selected to be a mica board.

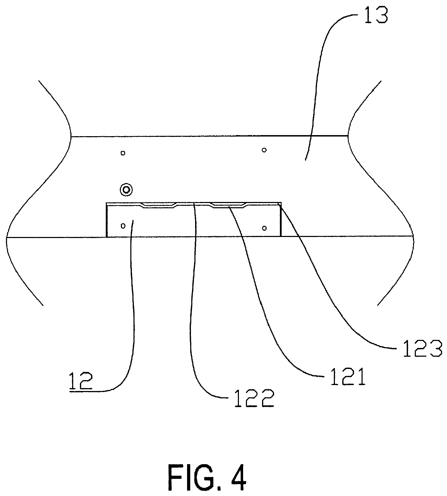

In order to reasonably utilize the space inside the battery module, or to achieve better heat dissipation of the battery module and other factors, the wiring harness board assembly 1 is further provided with an accommodating portion 12 for allowing BMS, phase change materials, or other components to be placed. With reference to FIG. 3 and FIG. 4, the accommodating portion 12 is disposed on the circuit board 15 in the length direction of the wiring harness board 11 and is located on the same side of the through holes 111 arranged side by side in the width direction. The accommodating portion 12 covers a partial region of at least one of the through holes 111. The accommodating portion 12 and the protective member 13 are adjacent to each other, and the two cover all the through holes 111.

Since the combination of the accommodating portion 12 and the protective member 13 covers all the through holes 111, in order to prevent the explosion-proof valve 211 from being difficult to break through the protective member 13 when thermal runaway occurs in a single battery 21, a gap is provided between the accommodating portion 12 and an adjacent side portion of the protective member 13. In this way, the explosion-proof valve 211 may burst open from the gap easily, so that the explosion-proof valve 211 is prevented from not fully exploding, is prevented from causing liquid to flow to the single batteries 21 adjacent to the single battery 21 in which thermal runaway occurs, and thus is prevented from causing thermal runaway to occur in the adjacent single batteries 21.

Preferably, with reference to FIG. 4, on a side portion of the accommodating portion 12 close to the explosion-proof valve 211, the position covering the explosion-proof valve 211 in the side portion is concave inwardly away from the protective member 13 to form a concave portion 121. The position of the side portion not covering the explosion-proof valve 211 protrudes outward towards the protective member 13 to form a convex portion 122, and the convex portion 122 abuts against the side portion of the protective member 13. A gap is provided between the concave portion 121 and the protective member 13. As such, when the explosion-proof valve 211 explodes, the positioning of the convex portion 122 is facilitated, and it is convenient for the protective member 13 to be accurately placed on the circuit board 15.

More preferably, the side portion of the accommodating portion 12 close to the explosion-proof valve 211 faces away from the circuit board 15 and extends upwards to form a shielding portion 123, and a height of the shielding portion 123 is higher than a height of the protective member 13. In this way, when the explosion-proof valve 211 explodes and breaks through the protective member 13, the liquid is prevented from being sprayed to the accommodating portion 12. Further, with reference to the direction shown in FIG. 4, shielding portions 123 may also be provided on the left and right sides of the accommodating portion 12 to prevent the liquid from entering the accommodating portion 12 when the liquid is ejected towards the left and right sides.

It should be noted that an area of a single through hole 111 covered by the accommodating portion 12 does not exceed 50% of the total area of the single through hole 111, so that the explosion of the explosion-proof valve 211 is prevented from being hindered.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A wiring harness board assembly (1), covering a battery apparatus (2) comprising a plurality of single batteries (21), the wiring harness board assembly (1) comprising:
a wiring harness board (11) provided with a plurality of through holes (111), wherein positions of the through holes (111) correspond one-to-one to positions of explosion-proof valves (211) of the single batteries (21);
an accommodating portion (12) disposed on the wiring harness board (11), wherein the accommodating portion (12) covers a partial region of at least one of the through holes (111); and
a protective member covering the through holes (111), wherein the protective member is adjacent to the accommodating portion (12), and a gap is provided between a side portion of the accommodating portion (12) covering the through holes (111) and the protective member.

2. The wiring harness board assembly (1) according to claim 1, wherein: the side portion of the accommodating portion (12) covering the through holes (111) faces away from the wiring harness board (11) and extends upwards to form a shielding portion (123), and a height of the shielding portion (123) is higher than a height of the protective member.

3. The wiring harness board assembly (1) according to claims 1 or 2, wherein: the side portion of the accommodating portion (12) corresponding to the through holes (111) is a concave portion (121) that is concave inwardly away from the protective member, two adjacent concave portions (121) are connected by a convex portion (122), and the convex portion (122) abuts against a side portion of the protective member.

4. The wiring harness board assembly (1) according to claims 1 or 2, wherein: an area of a single through hole (111) covered by the accommodating portion (12) does not exceed 50% of a total area of the single through hole (111).

5. The wiring harness board assembly (1) according to claim 4, wherein: the through holes (111) are provided in the middle of a width direction of the wiring harness board (11) and are arranged side by side in a length direction of the wiring harness board (11).

6. The wiring harness board assembly (1) according to claim 5, wherein: the accommodating portion (12) is arranged in the length direction of the wiring harness board (11) and is located on the same side of the through holes (111) arranged side by side in the width direction.

7. The wiring harness board assembly (1) according to claim 6, wherein: both sides in the width direction of the through holes (111) arranged side by side are provided with a plurality of busbars (14), the busbars (14) on both sides are arranged side by side in the length direction of the wiring harness board (11), and the busbars (14) on both sides are connected to a circuit board (15).

8. The wiring harness board assembly (1) according to claim 7, wherein: the circuit board (15) is located in the middle of the wiring harness board (11) in the width direction and extends in the length direction of the wiring harness board (11), and the positions of the circuit board (15) corresponding to the through holes (111) are via holes (151) penetrating through upper and lower surfaces.

9. The wiring harness board assembly (1) according to claim 7, wherein: the circuit board (15) is provided with a plurality of penetrating holes (112), and the positions of the penetrating holes (112) correspond one-to-one to the positions of the busbars (14) on both sides.

10. A battery module, comprising the wiring harness board assembly (1) according to any one of claims 1 to 9, wherein the wiring harness board assembly (1) covers the battery apparatus (2).
